(19) Europäisches Patentamt
European Patent Office
Office européen des brevets

(11) Veröffentlichungsnummer: **0 017 611**
**B1**

(12) # EUROPÄISCHE PATENTSCHRIFT

(45) Veröffentlichungstag der Patentschrift: **23.06.82**

(51) Int. Cl.³: **A 01 N 33/04,** C 09 D 5/14, C 02 F 1/50

(21) Anmeldenummer: **80810038.2**

(22) Anmeldetag: **04.02.80**

(54) **Verfahren zum Bekämpfen von Schadorganismen und Mittel für diese Bekämpfung.**

(30) Priorität: **09.02.79 CH 1294/79**

(43) Veröffentlichungstag der Anmeldung: **15.10.80 Patentblatt 80/21**

(45) Bekanntmachung des Hinweises auf die Patenterteilung: **23.06.82 Patentblatt 82/25**

(84) Benannte Vertragsstaaten: **BE DE FR GB IT NL**

(56) Entgegenhaltungen:
**DE-A-2 549 403**
**FR-A-2 200 244**

(73) Patentinhaber: **CIBA-GEIGY AG, Patentabteilung Postfach, CH-4002 Basel (CH)**

(72) Erfinder: **Grade, Reinhardt, Dr., Tulpenweg 11, D-6140 Bensheim (DE)**
Erfinder: **Lorenz, Joachim, Dr., Im Tiefen Weg 17, D-6140 Bensheim 3 (DE)**
Erfinder: **Muntwyler, René, Dr., Hutmattweg 6, CH-4114 Hofstetten (CH)**
Erfinder: **Peter, Heinz, Dr., Bahnhofstrasse 10, CH-4310 Rheinfelden (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 017 611 B1

# Verfahren zum Bekämpfen von Schadorganismen und Mittel für diese Bekämpfung

Die Erfindung betrifft die Verwendung von aliphatischen primären Diaminen als Aktivsubstanzen für die Bekämpfung von Schadorganismen in wäßrigen und nichtwäßrigen Systemen.

In der Literatur ist der Einsatz von aliphatischen primären Mono- und Diaminen, insbesondere von sogenannten Fettaminen, wie Kokosamin oder Dodecylamin, als Aktivsubstanzen gegen Bakterien, Pilze, Algen oder dergleichen bereits mehrfach beschrieben.

Diesbezüglich ist auf die folgenden Publikationen hinzuweisen: A. Simek et al »Antimicrobially active substances«, Folia Microbiologica 14, 508–510 (1969) H. J. Hueck et al »Bacteriostatic, fungistatic, and algistatic activity of fatty nitrogen compounds«, Appl. Microbiology 14, 308–319 (1966).

A. T. Fuller »Antibacterial action und chemical constitution in long-chain aliphatic bases«, Biochem J. 36, 548–558 (1942).

Als weiterer Stand der Technik ist auch das DE-Patent 2 247 369 anzuführen. In der DE-PS 2 247 369 wird die Verwendung von eine primäre Aminogruppe enthaltenden Verbindungen der Formel

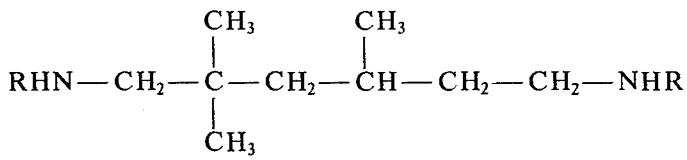

in der ein R einen Wasserstoffrest und das andere R einen Dodecylrest oder ein Gemisch von Alkylresten (Mittel $C_{12}H_{25}$-) bedeuten, als mikrobiocide Wirkstoffe beansprucht.

Alle bisher bekannten aliphatischen, mindestens eine primäre Aminogruppe aufweisenden Substanzen, welche eine biologische Aktivität aufweisen, haben nun aber den Nachteil, daß ihre mikrobiocide Wirksamkeit zu gering ist. Die Abtötung von grampositiven und gramnegativen Bakterien erfolgt nur ungenügend.

Die Aufgabe der Erfindung besteht darin, eine aliphatische, primäre Aminogruppen enthaltende Substanz zur Bekämpfung von Schadstoffen zu finden, welche sowohl eine gute biostatische Aktivität aufweist als auch gleichzeitig einen hervorragenden mikrobiociden Wirkstoff darstellt. Diese Substanz soll für die Abtötung grampositiver sowie gramnegativer Bakterien besser als die Aktivamine, welche nach Verfahren gemäß dem angeführten Stand der Technik eingesetzt werden, geeignet sein.

Gegenstand der Erfindung ist ein Verfahren zum Bekämpfen von Schadorganismen in Wasser und an Wasser enthaltenden oder praktisch wasserfreien Materialien durch Einmischen von aliphatischen primären Aminen als Aktivsubstanzen in das zu schützende Wasser oder Material oder durch Aufbringen der aliphatischen primären Amine auf die Oberfläche des zu schützenden Materials, welches dadurch gekennzeichnet ist, daß man als Aktivsubstanz ein Amin der Formel (I)

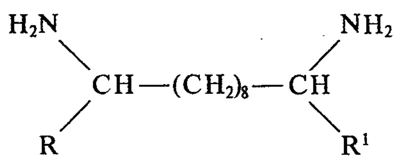

(I)

einsetzt, in der R und $R^1$ gleich oder verschieden sind und jeweils einen geradkettigen oder verzweigten Alkylrest mit insgesamt 1 bis 14 Kohlenstoffatomen oder einen gegebenenfalls alkylsubstituierten Cycloalkylrest mit insgesamt 3 bis 12 Kohlenstoffatomen bedeuten.

Erfindungsgemäß können sowohl die freien Diamine der Formel I als auch die Salze derselben mit z. B. den nachfolgend aufgeführten anorganischen oder organischen Säuren verwendet werden: Salzsäure, Phosphorsäure, phosphorige Säure, Kohlensäure, Schwefelsäure, schweflige Säure, Essigsäure, Zitronensäure, Ameisensäure.

Unter dem erfindungsgemäßen Einmischen der Diamine der Formel I ist vorwiegend ein Lösen und/oder Emulgieren der Diamine in dem zu schützenden Wasser oder Material zu verstehen. In bestimmten Fällen kann aber auch in der Weise vorgegangen werden, daß eine größere Menge an dem jeweiligen Diamin, als für das Lösen und/oder Emulgieren an sich erforderlich ist, zugegeben wird, oder daß das Diamin sehr vorsichtig zugegeben wird, so daß ein forciertes Lösen oder Emulgieren zunächst vermieden wird. Derartige Arbeitsweisen bewirken nämlich, daß auch großvolumige Teile bzw. große Tropfen in dem zu schützenden Material zugegen sind. Dies kann dann von Vorteil sein, wenn es auf eine Depotwirkung der Diamine ankommt.

Die erfindungsgemäß verwendeten Diamine sind hoch wirksam gegen die wichtigsten Schadorganismen und insbesondere gegen schädliche Mikroorganismen. Im einzelnen sind beispielsweise folgende durch das erfindungsgemäße Verfahren bekämpfbare Organismen anzuführen: Bakterien, Pilze, Hefen und Algen, aber auch die im Meerwasser vorkommenden

Ballaniden und Serpuliden.

Die erfindungsgemäß verwendeten Diamine der Formel I können mit nahezu allen gängigen antimikrobiell wirksamen Substanzen, teilweise unter Ausnutzung synergistischer Effekte, kombiniert werden. Bevorzugte Substanzklassen zum Kombinieren sind Verbindungen wie quaternäre Ammonium-, Phosphonium- und Sulfoniumsalze, andere Amine, Harnstoffe, Phenole, Aldehyde, Carbonsäuren, Tributylzinnoxid und seine Derivate, N-Oxide, Peroxide, Sulfide, Disulfide, Carbamate, gegebenenfalls halogensubstituierte Carbonsäureamide, Mercaptoverbindungen, wie Mercaptothiadiazole, 2-Mercaptopyridin-1-oxid sowie dessen Na- und Zn-Salz und Dihalogennitriloessigsäureamide, Jodverbindungen, Chlorhexidin, Iso- und Benzisothiazolonderivate.

Zur Ausnutzung von Synergismen können darüber hinaus die erfindungsgemäß in den Konservierungs- und Desinfektionsmitteln enthaltenden Verbindungen mit sauren, neutralen oder basischen Salzen und Puffern kombiniert werden.

Insbesondere bei der Bekämpfung von Schadorganismen in Kühlwasser können bei der erfindungsgemäßen Verwendung der Diamine der Formel I gleichzeitig weitere übliche Hilfsmittel zugegeben werden, wie z. B. Korrosionsinhibitoren, Kesselsteinverhinderer, Mittel für die Weichmachung des Wassers, Maskierungsmittel, z. B. polymere Phosphite, Phosphate, Amide der Phosphorsäure, Phosphonsäuren, polymere Carbonsäuren von z. B. Acrylsäure oder Maleinsäure, deren Anhydride oder Salze und andere Zusätze.

Bei dem erfindungsgemäßen Verfahren können die Diamine der Formel I auch in Form von flüssigen, pastenartigen oder festen Zubereitungen (Mittel) zu — bzw. aufgegeben werden. Derartige Zubereitungen können z. B. Suspensionen, Emulsionen und Lösungen in organischen oder anorganischen Lösungsmitteln sein. In antimikrobiell wirksamen Zubereitungen werden die erfindungsgemäß zu verwendenden Substanzen in Mengen von 0,1 bis 10 Gewichtsprozent, vorzugsweise 0,5 bis 5 Gewichtsprozent eingesetzt.

Die Zubereitungen können selbstverständlich zusätzlich auch gängige Wirksubstanzen gegen Schadorganismen, insbesondere die bereits oben erwähnten bekannten antimikrobiell wirksamen Substanzen enthalten. Dasselbe gilt für die oben angeführten basischen Salze und Puffer und auch für die Kühlwasser-Hilfsmittel.

Für die Herstellung der Mittel bzw. Zubereitungen gegen Schadstoffe werden im allgemeinen insbesondere die folgenden Hilfsstoffe benötigt: Trägerstoffe, Streckmittel, Emulgatoren, Anfeuchtmittel, Fixiermittel und grenzflächenaktive Verbindungen. Als Trägerstoffe kommen feste oder flüssige Trägerstoffe in Frage, wie Ton, Kaolin, Talkum, Diatomeenerde, Kieselsäure, Calciumcarbonat, Benzol, Alkohole, Xylol, Methylnaphthalin, Dimethylformamid, Diäthylsulfoxid, tierische und pflanzliche Öle, Fettsäuren und deren Ester und verschiedene grenzflächenaktive Verbindungen.

Eine Vorzugsform der Erfindung stellt ein Verfahren (A) dar, welches dadurch gekennzeichnet ist, daß man Schadorganismen in Wasser oder in wäßrigen Lösungen und Dispersionen mit einem Amin der Formel (I) bekämpft, in der R jeweils die gleiche Bedeutung wie $R^1$ hat und einen geradkettigen oder verzweigten Alkylrest mit insgesamt 1 bis 14 Kohlenstoffatomen oder einen gegebenenfalls alkylsubstituierten Cycloalkylrest mit insgesamt 3 bis 11 Kohlenstoffatomen darstellt.

Besonders wirkungsvoll ist dieses Verfahren (A), wenn man ein Amin der Formel (1) einsetzt, in der R einen geradkettigen Alkylrest oder einen Cycloalkylrest mit jeweils 5 bis 8 Kohlenstoffatomen, vorzugsweise einen geradkettigen Alkylrest mit 6 bis 8 C-Atomen, bedeutet.

Eine besondere Ausführungsform des Verfahrens (A) besteht darin, daß man die Bekämpfung der Schadorganismen in der Weise durchführt, daß man das Amin der Formel (I) in dem Wasser oder dem wäßrigen System in einer Konzentration von 0,05 bis 300 ppm, vorzugsweise 0,1 bis 50 ppm, bezogen auf das Wasser, löst und/oder emulgiert.

Eine andere günstige Ausführungsform des Verfahrens (A) ist dadurch gekennzeichnet, daß man die Schadorganismen in der Weise vorwiegend an der Grenzfläche von im Wasser befindlichen Kunststoffkörpern oder Schutzanstriche, insbesondere Antifoulinganstrichen, gegen das Wasser bekämpft, indem man solche Kunststoffkörper oder Schutzanstriche einsetzt, welche das Amin der Formel (I) eingemischt enthalten, wobei die Konzentration an dem Amin der Formel (I) 0,01 bis 10, vorzugsweise 0,1 bis 5, Gewichtsprozent, bezogen auf den Kunststoff oder den Schutzanstrich, beträgt.

Eine solche Arbeitsweise bewirkt, daß diese Kunststoffkörper und auch die eigentlich zu schützenden Bauteile aus Beton, Ziegeln, Holz, Metall oder dergleichen, auf dem diese Kunststoffe oder Schutzanstriche angebracht sind, vor dem Anwachsen von Organismen des Seewassers oder vor der Ablagerung von Schleimen, die durch Mikroorganismen jeder Art gebildet werden können, geschützt werden. Gleichzeitig kann sich die Schutzwirkung dabei auch auf das gesamte Wasser auswirken. Die aktive Wirkung des Diamins der Formel I ist also nicht unbedingt auf die Grenzfläche der Kunststoffkörper oder Schutzanstriche gegen das Wasser beschränkt.

Solche Kunststoffkörper, die dem Wasser ausgesetzt werden, sind vorzugsweise Rohre, Ventile, Hähne, Platten und Folien, letztere insbesondere zum Auskleiden von Wasserbehältern bzw. -becken, oder aber auch Wasserbecken oder -behälter. Als Kunststoffe kommen dabei vorzugsweise Polyolefine, wie Polyäthylen oder Polypropylen, Polystyrol, PVC, ungesättigte Polyesterharze,

synthetische oder natürliche Gummis oder auch Polycarbonate und Polyfluorcarbone in Betracht.

Als Schutzanstriche für das Verfahren (A) kommen insbesondere Antifoulingfarben zum Einsatz, welche als Grundstoffe die üblicherweise als Bindemittel bezeichneten und dem Fachmann bekannten Lackrohstoffe enthalten. Das sind vor allen Dingen PVC, Polyvinylidenchlorid, Polystyrol, Polyvinyltoluol, Polyvinylester, Polyacrylate, Polymethacrylate und entsprechende Ester sowie deren Mischpolymerisate, sowie SB- und ABS-Polymerisate, synthetischer und natürlicher Kautschuk (gegebenenfalls chloriert oder cyclisiert), Polyurethane, Epoxidharze und ungesättigte Polyesterharze. Die Verwendung solcher Antifoulingfarben für das erfindungsgemäße Verfahren stellt eine weitere Vorzugsform der Erfindung dar.

Die Bekämpfung der Schadorganismen nach dem Verfahren (A) kann auch sehr wirkungsvoll in der Weise durchgeführt werden, daß man einmal das Amin der Formel (I) in dem Wasser oder wäßrigen System löst und/oder emulgiert und gleichzeitig im Wasser befindliche Kunststoffkörper oder Schutzanstriche einsetzt, welche das Amin der Formel (I) eingemischt enthalten.

Das erfindungsgemäße Verfahren (A) wird vorzugsweise zur Bekämpfung von Schadorganismen in stehenden und fließenden Gewässern, wie Schwimmbädern und Teichen, insbesondere in Kühlwasserkreisläufen und Wasserkreisläufen sowie in der Papierindustrie angewandt, wobei diese Wässer sowohl Süßwasser als auch Seewasser sein können.

Das Verfahren (A) umfaßt auch die Bekämpfung von Schadorganismen in wäßrigen Dispersionen. Hierunter sind u. a. molekulardisperse (also echte) Salzlösungen, wie z. B. das bereits erwähnte Meerwasser und stark salzhaltiges Kühlwasser, das für Kühlungen auf unter 0°C geeignet ist, zu verstehen. Weiter sind derartige Dispersionen auch Suspensionen und Emulsionen, wie sie in der Technik manchmal vorkommen.

Der Gehalt an gelösten oder dispergierten Feststoffen und/oder nichtwäßrigen Flüssigkeiten in den wäßrigen Lösungen und Dispersionen, in denen gemäß Verfahren (A) Schadorganismen bekämpft werden können, ist im allgemeinen auf höchstens 10 Gew.-%, bezogen auf die Lösung oder Dispersion, beschränkt.

Die Diamine der Formel I sind beständig gegen pH-Einflüsse, so daß das erfindungsgemäße Verfahren bei praktisch allen möglichen pH-Werten durchführbar ist.

Eine weitere Vorzugsform der Erfindung stellt ein Verfahren (B) dar welches dadurch gekennzeichnet ist, daß man die Amine der Formel (I) zum Bekämpfen von Mikroorganismen, vorzugsweise zum Schützen von natürlichen, künstlichen und insbesondere technischen Materialien vor dem Befall durch Mikroorganismen, einsetzt, wobei in Formel (I) R und $R^1$ jeweils einen geradkettigen oder verzweigten Alkylrest mit insgesamt 1 bis 12 Kohlenstoffatomen oder einen gegebenenfalls alkylsubstituierten Cycloalkylrest mit insgesamt 5 bis 12 Kohlenstoffatomen, von denen höchstens 5 bis 8 ringbildende Kohlenstoffatome sind, bedeuten.

Bevorzugt setzt man bei diesem Verfahren (B) Amine der Formel I ein, in der R die gleiche Bedeutung wie $R^1$ hat, und bevorzugt stellt R einen geradkettigen oder verzweigten Alkylrest mit insgesamt 4 bis 8 Kohlenstoffatomen oder einen Cycloalkylrest mit 5 bis 8 Kohlenstoffatomen im Ring dar.

Die gemäß dem Verfahren (B) zu schützenden Materialien können auch Wasser enthalten. Der Gehalt an Wasser ist aber im allgemeinen auf höchstens 95 Gew.-%, bezogen auf das gesamte Material, beschränkt.

Der erfindungsgemäße Einsatz der Diamine der Formel I erfolgt nach dem Verfahren (B) einmal in der Weise, daß man dieselben in das zu schützende Material in einer Konzentration von 10 bis 2000 ppm, bezogen auf das zu schützende Material ohne gegebenenfalls vorhandenes Wasser, einmischt oder in demselben löst und/oder emulgiert. Auf diese Weise lassen sich beispielsweise technische Lösungen und Dispersionen (Suspensionen und Emulsionen) konservieren. Als solche sind z. B. formulierte Agrarchemikalien und Anstrichmittel in Dosen oder Kanistern, Leime, Stärkekleister, Schneid- und Bohröle zu nennen.

Das erfindungsgemäße Verfahren (B) läßt sich auch besonders wirkungsvoll in der Papier und Zellstoffindustrie anwenden. Hier wird vor allen Dingen die durch Mikroorganismen hervorgerufene, lästige Schleimbildung, welche an den Papier- und Zellstoffmassen sowie an Apparaten der Papierindustrie auftreten kann, bekämpft.

Eine andere Art des Einsatzes der aktiven Diamine nach Verfahren (B) erfolgt in Form einer Oberflächendesinfektion von festen Körpern, insbesondere von Wänden, Fußböden oder dergleichen. Als Beispiele für derartige zu schützende Materialien sind Holz, Bambus, Kunststoffe, Gestein und Mauerwerke, Textilien und Leder anzuführen, wobei in letzteren Fällen im allgemeinen nicht nur eine Oberflächeneinwirkung, sondern eine totale Imprägnierung resultiert. Besondere Bedeutung hat diese Oberflächendesinfektion in Schlachthöfen, Lebensmittelfabriken und Brauereien. Die Oberflächendesinfektion erfolgt durch Besprühen, Anstreichen, Berieseln oder Tränken der Gegenstände oder Oberflächen mit die aktiven Diamine enthaltenden Formulierungen, insbesondere mit entsprechenden wäßrigen oder nicht wäßrigen Lösungen. Zweckmäßig wird die Konzentration dieser Formulierungen an aktiven Aminen der Formel I so gewählt, daß die Oberflächen letztlich nach der Behandlung 0,1 bis 10 $g/m^2$ an Aktivaminen aufweisen.

Weiterer Gegenstand der Erfindung sind auch Mittel zum Bekämpfen von Schadorganismen in

Wasser oder in wäßrigen Lösungen und Dispersionen, enthaltend als Aktivsubstanz ein Amin der Formel I, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, wobei die Konzentration an dem Amin der Formel I 0,1 bis 10, vorzugsweise 0,5 bis 5, Gew.-%, bezogen auf das gesamte Mittel, beträgt.

Bevorzugt enthalten diese Mittel ein Amin der Formel (I) in der R bzw. $R^1$ einen geradkettigen Alkylrest oder einen Cycloalkylrest mit jeweils 5 bis 8 Kohlenstoffatomen, vorzugsweise einen n-Alkylrest mit 6 bis 8 C-Atomen, bedeutet.

Die erfindungsgemäßen Mittel können, wie bereits oben erwähnt, auch andere gängige Wirkstoffe gegen Schadorganismen und weitere Hilfsstoffe enthalten.

Weiterer Gegenstand der Erfindung sind vorzugsweise für den Einsatz in Wasser und für die Bekämpfung von Schadstoffen in Wasser vorgesehene Kunststoffkörper und -auskleidungen, insbesondere Rohre, Platten, Folien, Ventile und Hähne (oder entsprechende Küken und Einsätze), Behälter und Becken, welche dadurch gekennzeichnet sind, daß dieselben ein Amin der Formel I, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, in einer Konzentration von 0,01 bis 10, vorzugsweise 0,1 bis 5, Gew.-%, bezogen auf den gesamten Kunststoffkörper, eingemischt enthalten.

Weiterer Gegenstand der Erfindung sind Antifoulingfarben für Unterwasseranstriche, enthaltend ein gegen Schadstoffe aktives Amin der Formel I, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, in einer Konzentration von 0,01 bis 30, vorzugsweise 0,1 bis 10 Gew.-%, bezogen auf die gesamte Antifoulingfarbe.

Weiterer Gegenstand der Erfindung sind Mittel zum Bekämpfen von Mikroorganismen, enthaltend ein Diamin der Formel I, in der R und $R^1$ gleich oder verschieden sind und jeweils einen geradkettigen oder verzweigten Alkylrest mit insgesamt 1 bis 12 C-Atomen oder einen gegebenenfalls alkylsubstituierten Cycloalkylrest mit insgesamt 5 bis 12 C-Atomen, von denen höchstens 5 bis 8 ringbildende C-Atome sind, bedeuten, in einer Konzentration von 0,1 bis 10, vorzugsweise 0,5 bis 5, Gew.-%, bezogen auf das gesamte Mittel.

Bevorzugt enthalten diese Mittel ein Diamin der Formel I, in der R und $R^1$ jeweils die gleiche Bedeutung haben.

Bevorzugt sind dabei solche Amine der Formel I, in der R einen geradkettigen oder verzweigten Alkylrest mit insgesamt 4 bis 8 C-Atomen oder einen Cycloalkylrest mit 5 bis 8 C-Atomen im Ring bedeutet.

Die gemäß der Erfindung verwendeten Diamine der Formel I können z. B. analog dem in der US-PS 4 100 111 beschriebenen Verfahren durch katalytische Hydrierung von 1,2-Diaza-1,5,9-cyclododecatrienen oder entsprechenden 1,2-Diaza-1-cyclododecenen hergestellt werden.

Als Beispiele spezifischer Verbindungen der Formel I seien genannt:

1,10-Diamino-1,10-dicyclohexyldecan, hergestellt gemäß Beispiel 1 der US-Patentschrift 4 100 111;
1,10-Diamino-1,10-dicyclopentyldecan; hergestellt durch katalytische Hydrierung von 3,12-Dicyclopentyl-1,2-diaza-1,5,9-cyclododecatrien; farbloses Öl: Kp. 174–178° C/0,26 Pa; $n_D^{20}$=1,4885; IR (flüssig) u. a.
Banden bei 3355, 3278, 1613 $cm^{-1}$.
3,12-Diamino-2,13-dimethyltetradecan, hergestellt gemäß Beispiel 3 der US-Patentschrift 4 100 111.
6,15-Diaminoeicosan, hergestellt durch katalytische Hydrierung von 3,12-Di-n-pentyl-1,2-diazacyclododecen (Diastereomerengemisch), farbloses Öl: Kp. 167–170° C/0,13 Pa; $n_D^{20}$ =1,4603; IR (flüssig) u. a.
Banden bei 3378, 3289, 1613 $cm^{-1}$.
4,13-Diamino-3,14-diäthylhexadecan, hergestellt durch katalytische Hydrierung von 3,12-Di-(3-pentyl)-1,2-diazacyclododecen; farbloses Öl; Kp. 141–143° C/0,5 Pa; $n_D^{20}$ =1,4666; IR (flüssig) u. a.
Banden bei 3378, 3278, 1613 $cm^{-1}$.
7,16-Diaminodocosan, hergestellt durch katalytische Hydrierung von 3,12-Dihexyl-1,2-diazacyclododecen (Diastereomerengemisch); farbloses Öl; Kp. 184° C/2,6 bis 0,7 Pa: $n_D^{20}$ =1,4624; IR (flüssig) u. a.
Banden bei 3355, 3278, 1613 $cm^{-1}$.
8,17-Diaminotetracosan, hergestellt gemäß Beispiel 7 der US-Patentschrift 4 100 111, 6,15-Diamino-5,16-diäthyleicosan, hergestellt durch katalytische Hydrierung von 3.12-Di-(3-heptyl)-1,2-diazacyclododecen (Diastereomerengemisch); farbloses Öl; Kp. 170° C/1,3 Pa; $n_D^{20}$ =1,4662; IR (flüssig) u. a.
Banden bei 3278, 1613 $cm^{-1}$.
9,18-Diaminohexacosan, hergestellt durch katalytische Hydrierung von 3,12-Di-n-octyl-1,2-diaza-1,5,9-cyclododecatrien (Diastereomerengemisch); farbloses Öl; 10,19-Diaminooctacosan, hergestellt durch katalytische Hydrierung von 3,12-Di-n-nonyl-1,2-diaza-1,5,9-cyclododecatrien (Diastereomerengemisch); Smp. 33–37° C; IR ($CH_2Cl_2$) u. a.
Banden bei 3225, 1582 $cm^{-1}$.
11,20-Diaminotriacontan, hergestellt durch katalytische Hydrierung von 3,12-Di-n-decyl-1,2-diaza-

1,5,9-cyclododecatrien;
3,12-Diaminotetradecan, farbloses Öl (Kp. 83 bis 85° C/0,7 Pa)
4,13-Diaminohexadecan, farbloses Öl (Kp. 132 – 135° C/0,01 Torr)
5,14-Diaminooctadecan, farbloses Öl (Kp. 149° C/0,001 Torr)
4,13-Diamino-3,14-dimethylhexadecan, farbloses Öl (Kp. 143 – 145° C/7 Pa)
4,13-Diamino-2,15-dimethylhexadecan, farbloses Öl (Kp. 168 – 172° C/0,04 Torr)
12,21-Diaminodotriacontan, Smp. 45 bis 46° C
13,22-Diaminotetratriacontan

Die Herstellung der zuletzt aufgeführten 7 Produkte erfolgt ebenfalls durch katalytische Hydrierung entsprechender 1,2-Diaza-1,5,9-cyclododecatriene.

Die Herstellung der als Ausgangsprodukte verwendeten 1,2-Diaza-1,5,9-cyclododecatriene bzw. 1,2-Diazacyclododecene erfolgt nach den in den US-Patentschriften 3 939 147 und 4 100 111 beschriebenen Verfahren.

## Beispiele

### I. Verfahren (A)

### Beispiel 1 bis 13

(Bestimmung der minimalen Hemmkonzentration gegen Bakterien.) Die in Caso-Pepton-Bouillon (Merck) gewachsenen ÜNK's (über Nacht bebrütete Kulturen, der verschiedenen Bakterienstämme: 1 Escherichia coli, 13 Proteus vulgaris, 7 Pseudomonas aeruginosa, 10 Enterobacter aerogenes, 8 Serratia marcenscens, 11 Alcaligenes denitrificans, 2 Bacillus subtilis, 20 Streptomyces griseus, 6 Staphylococcus aureus werden jeweils in Saline 1/1000 verdünnt. Von den Suspensionen wird soviel in Caso-Pepton-Bouillon gegeben, daß die Bakterien erneut 1/100 verdünnt werden. Danach werden jeweils die in der Tabelle 1 angeführten Diamine der Formel I, in der R jeweils dieselbe Bedeutung wie $R^1$ hat, in Mengen von 5, 10, 30, 100 und 300 mg/l zugegeben. Nach einer Bebrütung von 24 h bei 30° C im Schüttelwasserbad wird nach Trübung ausgewertet. Die minimale Hemmkonzentration (MIC) ist die Konzentration, bei der die Bouillon nicht durch Bakterienwuchs trüb wird. Das Ergebnis ist in der folgenden Tabelle 1 veranschaulicht.

Tabelle 1

Bestimmung der MIC der Diamine (untersuchte Konzentration 5, 10, 30, 100, 300 mg/l)

| Beispiel | R bzw. $R^1$ in Formel I | Stämme 1 | 2 | 6 | 7 | 8 | 10 | 11 | 13 | 20 |
|---|---|---|---|---|---|---|---|---|---|---|
| 1 | Aethyl | 300 | >100 | >100 | >300 | >300 | >300 | >300 | >300 | 100 |
| 2 | n-Propyl | 100 | 100 | >100 | >300 | >300 | 300 | 300 | 300 | 100 |
| 3 | n-Butyl | ≤30 | 30 | 30 | >300 | 300 | 100 | 100 | 100 | 10 |
| 4 | i-Butyl | 100 | 30 | 100 | >300 | >300 | 100 | 100 | 300 | 30 |
| 5 | n-Pentyl | ≤10 | <5 | ≤5 | 100 | 100 | ≤10 | ≤10 | <10 | ≤5 |
| 6 | n-Hexyl | ≤5 | ≤5 | ≤5 | 30 | 10 | ≤5 | ≤5 | ≤5 | ≤5 |
| 7 | Cyclohexyl | ≤10 | ≤5 | 10 | 100 | 100 | 30 | 30 | 30 | ≤5 |
| 8 | n-Heptyl | ≤5 | ≤5 | ≤5 | ≤5 | ≤5 | ≤5 | ≤5 | ≤5 | ≤5 |
| 9 | 3-Heptyl | ≤5 | ≤5 | ≤5 | 30 | 100 | 10 | 30 | 30 | ≤5 |
| 10 | n-Octyl | ≤5 | ≤5 | ≤5 | 10 | ≤5 | ≤5 | ≤5 | ≤5 | ≤5 |
| 11 | Cyclooctyl | ≤5 | ≤5 | ≤5 | 30 | 10 | ≤5 | 10 | ≤5 | ≤5 |
| 12 | n-Nonyl | ≤10 | ≤5 | ≤5 | >300 | ≤10 | ≤10 | ≤10 | ≤10 | ≤5 |
| 13 | n-Decyl | ≤10 | ≤5 | ≤5 | >300 | 300 | 300 | 300 | ≤10 | ≤5 |

Aus der Tabelle 1 ist die hohe wuchs-hemmende Wirkung der Diamine gegen die verschiedenen Bakterien zu erkennen.

Beispiel 14

(Bestimmung der minimalen Abtötungskonzentration in 24 h bei Anwendung des 8,17-Diaminotetracosans.) Die im Caso-Pepton-Bouillon gewachsenen ÜNK's der verschiedenen Bakterienstämme:

1 Escherichia coli
2 Bacillus subtilis
4 Bacillus cereus var. mycoides
6 Staphylococcus aureus
7 Pseudomonas aeruginosa
8 Serratia marcescens
10 Enterobacter aerogenes
11 Alcaligenes denitrificans
13 Proteus vulgaris
19 Streptomyces aureofasciculus
20 Streptomyces griseus
27 Pseudomonas oleovorans

werden jeweils in Saline 1/100 verdünnt. Von den Suspensionen wird soviel in Saline oder Ringer-Lösung gegeben, daß jeweils die Bakterien in der Mischung 1/1000 verdünnt werden.

Danach wird das Diamin der Formel I, in der R und $R^1$ jeweils n-Heptyl bedeuten, in einer solchen Menge zugesetzt, daß die Konzentration an dem Diamin jeweils 1,2,4,6,8,10,15,20,25 und 30 mg/l beträgt. Zum Vergleich wird entsprechend mit Kokosamin verfahren.

Nach einer Bebrütung von 24 h bei 30°C im Schüttelwasserbad werden aus der Probe 10 µl entnommen und auf Caso-Pepton-Agar getropft. Nach einer erneuten Bebrütung bei 30°C für 24 h wird visuell nach Wuchs geprüft. In der folgenden Tabelle 2 bedeutet + =Wuchs auf der Agar-Platte und — kein Wuchs und damit Abtötung der Bakterien in der Puffer-Lösung.

Tabelle 2

Bestimmung der Abtötungskonzentration gegen die Mischkultur von Bakterien

| Konzentration (mg/l) | 8,17-Diamino-tetracosan | Kokosamin als Vergleich |
|---|---|---|
| 1 | + | + |
| 2 | (+) | + |
| 4 | – | + |
| 6 | – | + |
| 8 | – | + |
| 10 | – | (+) |
| 15 | – | – |
| 20 | – | – |
| 25 | – | – |
| 30 | – | – |

Aus der Tabelle 2 ist die hervorragende Wirkung des 8,17-Diaminotetracosans in der Abtötung zu erkennen.

Zur Abtötung einer Mischkultur der 12 Bakterien in Ringer-Lösung oder Saline werden von den Diamin 4 ppm und von Kokosamin 15 ppm (3–4×) benötigt.

Beispiele 15 bis 18

(Beispiel 18 = Vergleichsbeispiel)

(Bestimmung der minimalen Abtötungskonzentration von Diaminen der Formel I und Laurylamin in verschiedenen Zeiten.)

Von den im Caso-Pepton-Bouillon gewachsenen ÜNK's der verschiedenen Bakterienstämme

1 Escherichia coli
4 Bacillus cereus var. mycoides
6 Staphylococcus aureus
7 Pseudomonas aeruginosa
10 Enterobacter aerogenes
13 Proteus vulgaris

werden zur Herstellung der Mischkultur jeweils soviel in Saline gegeben, daß eine Endverdünnung von 1/1000 erreicht wird.

Nach verschiedenen Zeiten der Behandlung mit dem jeweiligen Biocid bei 30°C im Schüttelwasserbad wird die Keimzahl mittels Verdünnen, Ausspateln und erneute Bebrütung bestimmt.

In der Tabelle 3 ist der zeitliche Abtötungsverlauf für 3 gemäß der Erfindung angewandte Diamine, welche in der für die Abtötung innerhalb von 6 Stunden minimalen Konzentration vorliegen, veranschaulicht und mit der Wirkung von Laurylamin verglichen.

Folgende Diamine werden geprüft:

Beispiel 15 9,18-Diaminohexacosan (min. Konz. 2 ppm)
Beispiel 16 8,17-Diaminotetracosan (min. Konz. 2 ppm)

Beispiel 17 7,16-Diaminodocosan (min. Konz. 5 ppm)
Beispiel 18 (Vergleich) Laurylamin (angewandte Konz. 10 ppm)

Aus der Tabelle ist deutlich die überraschend hohe abtötende Wirkung der Diamine der Formel I feststellbar. Zur Abtötung der Mischkultur genügen bei Anwendung der Diamine der Formel I in der angegebenen Konzentration 2 bis 6 Stunden, während 10 ppm Laurylamin nicht ausreichen um eine Abtötung innerhalb von 12 Stunden zu erwirken.

Tabelle 3

Bestimmung der Keimzahl nach verschiedenen Zeiten der Behandlung mit 4 verschiedenen Aminen in Saline

| Beispiel | Konzentration mg/l | Zeit nach der Biocid-Zugabe h | Keimzahl/ml |
|---|---|---|---|
| 15 | 2 | 1 | $5 \times 10^3$ |
| | | 2,5 | $1 \times 10^3$ |
| | | 5,5 | $1 \times 10^2$ |
| | | 8,5 | $4 \times 10^2$ |
| 16 | 2 | 1 | $8 \times 10^3$ |
| | | 2,5 | $<10^2$ |
| | | 5,5 | $<10^2$ |
| | | 8,5 | $<10^2$ |
| 17 | 5 | 1 | $4 \times 10^6$ |
| | | 2,5 | $1 \times 10^5$ |
| | | 5,5 | $1 \times 10^2$ |
| | | 8,5 | $<10^2$ |
| 18 | 10 | 1 | $2 \times 10^7$ |
| | | 2,5 | $2 \times 10^7$ |
| | | 5,5 | $1 \times 10^7$ |
| | | 8,5 | $1 \times 10^7$ |

Kontrolle nach 0 min. Biocid-Zugabe $4 \times 10^7$ Keime/ml.

**Beispiele 19 bis 22**

(Bestimmung der minimalen Hemmkonzentration an Diaminen der Formel I gegen Algen.)
Die in Algen-Nährmedium über 14 Tage gewachsenen Kulturen der verschiedenen Algenstämme:

Oscillatoria geminata
Nostoc spez.
Phormidium foveolarum
Anacystis nidulans
Chlorella vulgaris
Chlorella pyrenoidosa
Scenedesmus spec.

Ulothrix subtilissima
Tribonema aequale

werden in Algen-Nährmedium zur Herstellung der Mischkultur 1/200 verdünnt. Danach werden jeweils die in der Tabelle 4 angeführten Diamine der Formel I in solchen Mengen zugegeben, daß Konzentrationen von 1, 3, 10 und 30 mg/l resultieren. Nach einer Bebrütung von 14 Tagen bei 18° C im Schüttler wird visuell der Wuchs beurteilt. In Tabelle 4 wird die zur Hemmung des Wuchses der Mischkultur von Algen jeweils benötigte Konzentration der verschiedenen Diamine veranschaulicht.

Tabelle 4

| Beispiel | $R = R^1$ in Formel I | Konzentration (mg/l) |
|---|---|---|
| 19 | n-Butyl | 10 |
| 20 | n-Hexyl | 1 |
| 21 | n-Octyl | 10 |
| 22 | Cyclooctyl | 3 |

### Beispiele 23 bis 32

(Bestimmung der minimalen Hemmkonzentration an den erfindungsgemäß verwendeten Diaminen gegen Pilze.)

Die Untersuchung wird mit dem bekannten Agar-Inkorporations-Test mit den Pilzen

CA = Candida albicans
TM = Trichophyton mentagrophytes
AN = Aspergillus niger
PF = Penicillium funiculosum
AA = Alternaria alternata

durchgeführt. Zur Hemmung werden jeweils soviel an verschiedenen Diaminen der Formel I zugegeben, daß Konzentrationen von 3, 10, 30, 100 und 300 mg/l resultieren.

Die zur Hemmung minimal jeweils benötigte Konzentration (mg/l) ist in der Tabelle 5 veranschaulicht.

Tabelle 5

| Beispiel | R = $R^1$ in Formel I | Pilze | | | | |
|---|---|---|---|---|---|---|
| | | CA | TM | AN | PF | AA |
| 23 | Äthyl | 300 | >300 | >300 | 100 | >300 |
| 24 | n-Butyl | 100 | 100 | 100 | 10 | 100 |
| 25 | n-Pentyl | 30 | 30 | 30 | 3 | 10 |
| 26 | n-Hexyl | 10 | 10 | 30 | 3 | 10 |
| 27 | n-Heptyl | 10 | 10 | 30 | 3 | 3 |
| 28 | 3-Heptyl | 10 | 10 | 30 | 10 | |
| 29 | n-Octyl | 30 | 30 | 100 | 30 | |
| 30 | Cyclooctyl | 10 | 10 | 100 | 10 | |
| 31 | n-Nonyl | 300 | 100 | 300 | 30 | 10 |
| 32 | n-Decyl | >300 | 300 | >300 | 300 | 100 |

Die in den Tabellen 4 und 5 veranschaulichten Versuchsergebnisse zeigen die hohe Wirksamkeit der erfindungsgemäß verwendeten Diamine auch gegen Algen und Pilze.

## II. Verfahren (B)

### Beispiele 33 bis 54

Im folgenden wird die bakterizide und fungizide Aktivität der unten angeführten Wirkstoffe im Suspensionstest geprüft.

Ein Phosphatpuffermedium (pH 5,7 und 8), das jeweils 1000, 100, 10, 1 oder 0,1 ppm an Aktivamin der Formel I enthält, wird mit jeweils einem Teststamm (Bakterien: 0/n-Kulturen, Pilze: Sporensuspension 14 tg Kulturen) inoculiert (Endkonzentration $10^6$ Keime/ml). Nach einer Incubationsdauer von 18 Stunden bei 20°C auf einem Magnetrührwerk wird geprüft, bei welchen Konzentrationen eine Abtötung der Keime eingetreten ist. Die geprüften Verbindungen zeigen in diesem Test eine ausgezeichnete keimtötende Wirkung.

Als Testkeime werden verwendet:

| | |
|---|---|
| Staphylococcus aureus | ATCC 6538 |
| Escherichia coli | ATCC 11229 |
| Pseudomonas aeruginosa | ATCC 15442 |
| Aspergillus niger | ATCC 6275 |

Medium: Phosphatpuffer nach Sörensen (1/15 molar) mit 2% Brain-Heart-Infusions-Broth.
Als Diamine der Formel I werden folgende Substanzen verwendet.

| Beispiel | R = $R^1$ in Formel I | Aktives Amin |
|---|---|---|
| 33 | Methyl | 2,11-Diaminododecan |
| 34 | Äthyl | 3,12-Diaminotetradecan |
| 35 | n-Propyl | 4,13-Diaminohexadecan |
| 36 | i-Propyl | 3,12-Diamino-2,13-dimethyltetradecan |
| 37 | n-Butyl | 5,14-Diaminooctadecan |
| 38 | 2-Butyl | 4,13-Diamino-3,14-dimethylhexadecan |
| 39 | Isobutyl | 4,13-Diamino-2,15-dimethylhexadecan |
| 40 | n-Pentyl | 6,15-Diaminoeicosan |
| 41 | Cyclopentyl | 1,10-Diamino-1,10-dicyclopentyldecan |
| 42 | 3-Pentyl | 4,13-Diamino-3,14-diäthylhexadecan |
| 43 | n-Hexyl | 7,16-Diaminodocosan |
| 44 | Cyclohexyl | 1,10-Diamino-1,10-dicyclohexyldecan |
| 45 | n-Heptyl | 8,17-Diaminotetracosan |
| 46 | 3-Heptyl | 6,15-Diamino-5,16-diäthyleicosan |
| 47 | Cycloheptyl | 1,10-Diamino-1,10-dicycloheptyldecan |
| 48 | n-Octyl | 9,18-Diaminhexacosan |
| 49 | 4-Octyl | 6,15-Diamino-5,16-dipropyleicosan |
| 50 | Cyclooctyl | 1,10-Diamino-1,10-dicyclooctyldecan |
| 51 | n-Nonyl | 10,19-Diaminooctacosan |
| 52 | n-Decyl | 11,20-Diaminotriacontan |
| 53 | Undecyl | 12,21-Diaminodotriacontan |
| 54 | Dodecyl | 13,22-Tetratriacontan |

### Beispiele 55 bis 76

In den folgenden Beispielen werden dieselben Activdiamine der Formel I wie in den Beispielen 33 bis 54 auf die bakteriostatische und fungistatische Wirkung nach dem Agar-Inkorporationstest geprüft.

Von den Testverbindungen wird jeweils eine 5%ige Stammlösung in Methylcellosolve bereitet. Von dieser Stammlösung wird eine Verdünnungsreihe bereitet. so daß sich die Konzentrationen in den einzelnen Lösungen um jeweils eine Zehnerpotenz unterscheiden. Von den so erhaltenen Lösungen werden jeweils 0,3 ml in sterile Petrischalen vorgelegt und mit jeweils 15 ml heißem, flüssigem Nährmedium (Nutrient-Agar) vermischt. Im Nährmedium sind dann 1000, 100, 10, 1 und 0,1 ppm an Aktivamin enthalten.

Nach dem Erstarren der Platten werden auf diese mit einer Pasteuerpipette bzw. mit dem Impfapparat die jeweiligen Keimsuspensionen (es wurden dieselben Keime wie in den Beispielen 33 bis 54 verwendet) aufgetropft. Die Inkubationszeit für Bakterien beträgt 24 Stunden bei 37°C, für Aspergillus niger 3 Tage bei 28°C. Es wird danach beurteilt, bis zu welcher Konzentration an Wirksubstanz die Keime gewachsen sind. Alle 22 geprüften Verbindungen zeigen eine bakteriostatische bzw. fungistatische Wirkung gegenüber den geprüften Keimen.

Beispiel 77

Die Diamine der Formel I werden in einer geeigneten Formulierung (Äthylcellosolve/Dimethylformamid) gelöst. Die unten aufgeführten drei Substrate werden in die Formulierbäder eingelegt und anschließend zwischen 2 Aluminiumfolien abgequetscht und darauf luftgetrocknet. Die Abquetschung wird so durchgeführt, daß sich 1000 ppm Wirksubstanz auf dem Gewebe befinden.

1. Baumwolle renforcé, laugiert, gebleicht, $m^2$-Gewicht: 121 g
2. Polyamid, Nylon-Stapelgewebe, fixiert, gebleicht, $m^2$-Gewicht: 140 g
3. Polyester, Dacron-Stapelgewebe, Typ 54, fixiert, gebleicht, $m^2$-Gewicht: 130 g.

Die Substrate werden darauf nach dem Agardiffusionstest (modif. ATCC-Test Methode 90, 1970) gegen die unten aufgeführten 7 Testorganismen geprüft.

Bakterien:

| | |
|---|---|
| Staphylcoccus aureus | ATCC 6538 |
| Escherichia coli | NCTC 8196 |
| Proteus mirabilis | NCTC 8309 |
| Pseudomonas aeruginosa | NCTC 8060 |

Fungi:

| | |
|---|---|
| Candida albicans | ATCC 10259 |
| Trichophyton mentagrophytes | ATCC 9533 |
| Aspergillus niger | ATCC 6275 |

Die Testplatten, bestehend aus einem Zweischichtenagar, d. h. aus einer Grundschicht aus unbeimpftem Nähragar und einer Deckschicht aus angeimpftem Nähragar (Nutrient-Agar für Bakterien, Mycophil-Agar Fungi). Die filtrierte Keimsuspension wird auf eine erstarrte Grundschicht gegossen und nach dem Erstarren der beimpften Schicht werden Rondellen zu 20 mm Durchmesser der behandelten Substrate aufgelegt. Die Bebrütung der Bakterien- und Candida-Platten erfolgt während 24 Stunden bei 37°C, die Fungi-Platten werden während 3 bis 5 Tagen bei 28°C inkubiert. Nach der Inkubation werden die Platten hinsichtlich Hemmzone ausgewertet. Bei fehlender Hemmzone wird der Bewuchs unter dem Prüfling mit der Lupe kontrolliert.

Die auf diese Weise geprüften Diamine zeigen in Verbindung mit den verwendeten Substraten eine gute Wirkung gegen die verwendeten Bakterien und Pilze.

Beispiel 78

Durch Mischen der folgenden Bestandteile wird ein emulgierbares Konzentrat hergestellt:

10 Gewichtsteile 1,10-Diaminoalkan der Formel I
68 Gewichtsteile Xylol
10 Gewichtsteile Dimethylformamid
12 Gewichtsteile grenzflächenaktive Verbindung

Das Konzentrat wird vor der Anwendung mit Wasser auf die 50- bis 200fache Menge verdünnt. In der so erhaltenen Emulsion werden Holz oder Sägemehl getränkt, wodurch sie gegen Bakterien- und Pilzbefall geschützt sind.

Beispiel 79

Durch Mischen der folgenden Bestandteile wird ein öllösliches Konzentrat hergestellt:

20 Gewichtsteile 1,10-Diaminoalkan der Formel I
40 Gewichtsteile Äthylenglykolmonoäthyläther
10 Gewichtsteile Dimethylformamid
30 Gewichtsteile Xylol

Das erhaltene Konzentrat wird einer Anstrichfarbe bzw. einem Schneidöl derart zugemischt, daß die Farbe bzw. das Öl 0,1 Gewichtsprozent an Diamin enthalten. Es wird dadurch ein Schutz vor Bakterien- und Pilzbefall erreicht.

### Beispiel 80

Einsatz in Antifoulingfarben

Die erfindungsgemäße Verbindung nach Formel I mit R und $R^1$ = n-Octyl wurde in zwei verschiedenen Antifoulingfarbtypen A und B getestet. Bei der ersten Farbe (A) handelt es sich um eine Chlorkautschuk-Antifoulingfarbe, die die zu prüfende Verbindung als alleiniges Antifoulingadditiv in einer Konzentration von 28,5 Vol.-% des Gesamtfeststoffes enthielt. In der zweiten Antifoulingfarbe (B), basierend auf Vinylchloridmischpolymerisat-Kolophonium als Bindemittel, wurde die zu prüfende Verbindung ebenfalls mit 28,5 Vol.-% des Gesamtfeststoffs eingesetzt. Der Aufbau der Antifoulingfarben war wie folgt:

| A | Gew.-Teile |
|---|---|
| Chlorkautschuk Typ 10 | 71 |
| Weichmacher (Clophen A 60) | 6 |
| Epoxid. Sojaöl | 2 |
| Talkum | 32 |
| Eisenoxidrot | 55 |
| Schwerspat | 50 |
| Aromatenreiches Testbenzin | 115 |
| Butylacetat | 7 |
| Xylol | 115 |

| B | Gew.-Teile |
|---|---|
| Vinylchlorid-acetat-harz (91%VC, 3%VAC, 6%BA) | 41 |
| Kolophonium | 14 |
| Tris-tolyl-phosphat | 7 |
| Epoxid. Sojaöl | 2 |
| Talkum | 32 |
| Eisenoxidrot | 55 |
| Schwerspat | 50 |
| MIBK | 79 |
| Xylol | 83 |

Die Antifoulingfarben A bzw. B wurden auf vorbereitete Testplatten in einer Schichtdicke von ca. 60 µ appliziert (Plattenvorbereitung: Stahlplatten, gesandstrahlt, Vinylbutyralprimer, Mennige-Korrosionsanstrich, wobei für die Chlorkautschuk-Antifoulingfarbe eine Mennige auf Basis Chlorkautschuk,

für die andere eine Mennige auf Basis Vinylchloridmischpolymerisat hergestellt wurde). Zur praxisgerechten Testung wurden die Platten auf einer Teststation im Mittelmeer ausgelegt, bei der sehr starker Bewuchs durch Meeresorganismen erfolgt.

### Bewertung

Die Bewertung erfolgt nach einem Ziffernschema, bei dem 0 völligen Bewuchs und 10 völlige Bewuchsfreiheit bedeutet. Die Ziffern 1–9 entsprechen dann einer graduellen Abstufung der Bewuchsintensität. Die Testung erfolgte während der Wachstumsperiode von Mitte Juni bis Ende Februar des darauffolgenden Jahres. In dieser Zeit erfolgt in dieser Region insbesondere ein Bewuchs durch Röhrenwürmer (Serpuliden) und Seepocken (Balaniden). Folgende Ergebnisse wurden erzielt:

Anstrichprobe A
Vorderseite 9, Rückseite 7, überwiegend Serpuliden
Anstrichprobe B
Vorderseite 8, Rückseite 2, Bewuchs überwiegend Balaniden

### Beispiel 81

### Untersuchung der Wirksamkeit in Modellkreisläufen

### Versuchsbeschreibung

Auf dem Dach stehende (natürliche Sonneneinstrahlung, Staubeinfall, Witterungseinflüsse) Modellkreisläufe, die aus einem Kunststoff-Faß und einem Kühlturm aus verschiedenen Materialien bestanden, über dem mittels einer Pumpe Wasser zirkulierte, wurden folgende Verbindungen auf ihre schleimverhindernde Wirkung untersucht:

Kokosamin, Verbindung der Formel I mit R und $R^1$ = n-Hexyl, Verbindung der Formel I mit R und $R^1$ = n-Heptyl.

Die Frischwasserzufuhr war so eingestellt, daß der Spritz- und Verdunstungsverlust ausgeglichen wurde und die Biocide in einer Woche ungefähr 1 : 2 verdünnt wurden. Vor Biocidzugabe, die 1mal wöchentlich erfolgte, wurde jeweils mit folgenden Kulturen angeimpft:

1. 14 Tage alte Algenkulturen von
   Oscillatoria geminata
   Nostoc spez.
   Phormidium foveolarum
   Anacystis nidulans
   Chlorella vulgaris
   Chlorella pyrenoidosa
   Scenedsmus spec.
   Ulothrix subtilissima
   Tribonema aequale

2. Jeweils ÜNK's der Bakterienstämme von
   Bacillus cereus var. mycoides
   Bacillus subtilis
   Streptomyces griseus
   Staphylococcus aureus
   Pseudomonas aeruginosa
   Enterobacter aerogenes
   Serratia marcescens
   Alcaligenes Denitrificans
   Escherichia coli
   Proteus vulgaris

Die Versuchsdauer betrug 8 Wochen.

Die auf diese Weise geprüften Amine zeigten eine hervorragende Wirkung. Auch in Konzentrationen, die in dem System nicht bakterienwuchshemmend wirken (z. B. durch laufende Frischwasserzufuhr), wird sowohl durch das Diamin der Formel I, worin R und $R^1$ n-Hexyl, wie durch das Diamin der Formel I, worin R und $R^1$ n-Heptyl bedeuten, die Schleimbildung verhindert, während bei den unbehandelten und mit Kokosamin behandelten Kreisläufen Algenbewuchs und Schleimbildung stattfindet.

**Patentansprüche**

1. Verfahren zum Bekämpfen von Schadorganismen in Wasser und an Wasser enthaltenden oder praktisch wasserfreien Materialien durch Einmischen von aliphatischen primären Aminen als Aktivsubstanzen in das zu schützende Wasser oder Material oder durch Aufbringen der aliphatischen primären Amine auf die Oberfläche des zu schützenden Materials, dadurch gekennzeichnet, daß man als Aktivsubstanz ein Amin der Formel (I)

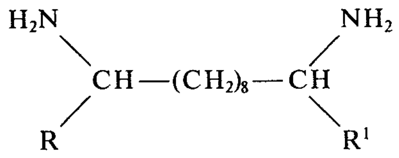

(I)

einsetzt, in der R und $R^1$ gleich oder verschieden sind und jeweils einen geradkettigen oder verzweigten Alkylrest mit insgesamt 1 bis 14 Kohlenstoffatomen, oder einen gegebenenfalls alkylsubstituierten Cycloalkylrest mit insgesamt 3 bis 12 Kohlenstoffatomen bedeuten.

2. Verfahren (A) nach Anspruch 1, dadurch gekennzeichnet, daß man Schadorganismen in Wasser oder in wäßrigen Lösungen und Dispersionen mit einem Amin der Formel (I) bekämpft, in der R jeweils die gleiche Bedeutung wie $R^1$ hat und einen geradkettigen oder verzweigten Alkylrest mit insgesamt 1 bis 14 Kohlenstoffatomen oder einen gegebenenfalls alkylsubstituierten Cycloalkylrest mit insgesamt 3 bis 11 Kohlenstoffatomen darstellt.

3. Verfahren nach Anspruch 2, dadurch gekennzeichnet, daß man ein Amin der Formel (I) einsetzt, in der R einen geradkettigen Alkylrest mit 6 bis 8 C-Atomen darstellt.

4. Verfahren (B) nach Anspruch 1, dadurch gekennzeichnet, daß man die Amine der Formel (I) zum Bekämpfen von Mikroorganismen, vorzugsweise zum Schützen von natürlichen, künstlichen und insbesondere technischen Materialien vor dem Befall durch Mikroorganismen, einsetzt, wobei in Formel (I) R und $R^1$ jeweils einen geradkettigen oder verzweigten Alkylrest mit insgesamt 1 bis 12 Kohlenstoffatomen oder einen gegebenenfalls alkylsubstituierten Cycloalkylrest mit insgesamt 5 bis 12 Kohlenstoffatomen, von denen höchstens 5 bis 8 ringbildende Kohlenstoffatome sind, bedeuten.

5. Verfahren nach Anspruch 4, dadurch gekennzeichnet, daß man Amine der Formel (I), in der R die gleiche Bedeutung wie $R^1$ hat, einsetzt.

6. Verfahren nach Anspruch 5, dadurch gekennzeichnet, daß man ein Amin der Formel (I) einsetzt, in der R einen geradkettigen oder verzweigten Alkylrest mit insgesamt 4 bis 8 Kohlenstoffatomen oder einen Cycloalkylrest mit 5 bis 8 Kohlenstoffatomen im Ring bedeutet.

7. Mittel zum Bekämpfen von Schadorganismen in Wasser oder in wäßrigen Lösungen und Dispersionen nach Anspruch 2, enthaltend als Aktivsubstanz ein Amin der Formel I, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, wobei die Konzentration an dem Amin der Formel I 0,1 bis 10, vorzugsweise 0,5 bis 5 Gewichtsprozent, bezogen auf das gesamte Mittel, beträgt.

8. Für die Bekämpfung von Schadstoffen nach Anspruch 1 vorgesehene Kunststoffkörper und -auskleidungen, insbesondere Rohre, Platten, Folien, Ventile und Hahnen (oder entsprechende Küken und Einsätze), Behälter und Becken, dadurch gekennzeichnet, daß dieselben ein Amin der Formel I, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, in einer Konzentration von 0,01 bis 10, vorzugsweise 0,1 bis 5 Gewichtsprozent, bezogen auf den gesamten Kunststoffkörper, eingemischt enthalten.

9. Antifoulingfarben für Unterwasseranstriche, enthaltend ein gegen Schadstoffe aktives Amin der Formel I nach Anspruch 1, in der R und $R^1$ jeweils gleich sind und einen geradkettigen oder verzweigten Alkylrest mit insgesamt 1 bis 14 C-Atomen oder einen gegebenenfalls alkylsubstituierten Cycloalkylrest mit insgesamt 3 bis 11 C-Atomen bedeuten, in einer Konzentration von 0,01 bis 30, vorzugsweise 0,1 bis 10 Gewichtsprozent, bezogen auf die gesamte Antifoulingfarbe.

10. Mittel zum Bekämpfen von Mikroorganismen nach Anspruch 4, enthaltend ein Diamin der Formel I, in der R und $R^1$ gleich oder verschieden sind und jeweils einen geradkettigen oder verzweigten Alkylrest mit insgesamt 1 bis 12 C-Atomen oder einen gegebenenfalls alkylsubstituierten Cycloalkylrest mit insgesamt 5 bis 12 C-Atomen, von denen höchstens 5 bis 8 ringbildende C-Atome sind, bedeuten, in einer Konzentration von 0,1 bis 10, vorzugsweise 0,5 bis 5 Gewichtsprozent, bezogen auf das gesamte Mittel.

**Claims**

1. A method for the control of harmful organisms in water and on materials which contain water or are virtually anhydrous, by mixing aliphatic primary amines, as active substances, into the water or

material to be protected, or by applying the aliphatic primary amines to the surface of the material to be protected, which comprises using, as the active substance, an amine of the formula (I)

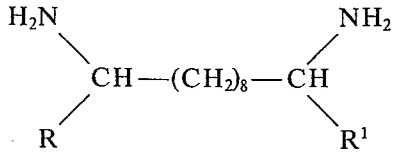

(I)

in which R and $R^1$ are identical or different and are each a straight-chain or branched alkyl radical having a total of 1 to 14 carbon atoms or a cycloalkyl radical which has a total of 3 to 12 carbon atoms and can be substituted by alkyl.

2. A method (A) according to claim 1, which comprises the control of harmful organisms in water or in aqueous solutions and dispersions with an amine of the formula (I) in which R in each case is the same as $R^1$ and is a straight-chain or branched alkyl radical having a total of 1 to 14 carbon atoms or a cycloalkyl radical which has a total of 3 to 11 carbon atoms and can be substituted by alkyl.

3. A method according to claim 2, wherein an amine of the formula (I) is employed in which R is a straight-chain alkyl radical having 6 to 8 C atoms.

4. A method (B) according to claim 1, which comprises using the amines of the formula (I) for the control of micro-organisms and preferably for protecting natural, synthetic and in particular industrial materials against attack by micro-organisms, R and $R^1$ in the formula (I) being, in each case, a straight-chain or branched alkyl radical having a total of 1 to 12 carbon atoms or a cycloalkyl radical which has a total of 5 to 12 carbon atoms, of which not more than 5 to 8 are ring-forming carbon atoms, and can be substituted by alkyl.

5. A method according to claim 4, wherein amines of the formula (I) are employed in which R and $R^1$ are identical.

6. A method according to claim 5, wherein an amine of the formula (I) is employed in which R is a straight-chain or branched alkyl radical having a total of 4 to 8 carbon atoms or a cycloalkyl radical having 5 to 8 carbon atoms in the ring.

7. A composition for the control of harmful organisms in water or in aqueous solutions and dispersions according to claim 2 containing, as the active substance, an amine of the formula I in which R and $R^1$ are in each case identical and are a straight-chain or branched alkyl radical having a total of 1 to 14 C atoms or a cycloalkyl radical which has a total of 3 to 11 C atoms and can be substituted by alkyl, the concentration of the amine of the formula I being 0.1 to 10 and preferably 0.5 to 5 per cent by weight, based on the total composition.

8. Plastic bodies and linings, in particular pipes, sheets, films, valves and taps (or corresponding plugs, of cocks or taps, and inserts), containers and basins, which are intended for the control of harmful substances, according to claim 1, into which plastic bodies and linings an amine of the formula I, in which R and $R^1$ are identical in each case and are a straight-chain or branched alkyl radical having a total of 1 to 14 C atoms or a cycloalkyl radical which has a total of 3 to 11 C atoms and can be substituted by alkyl, has been mixed in a concentration of 0.01 to 10 and preferably 0.1 to 5 per cent by weight, based on the total plastic body.

9. An antifouling paint for underwater paintwork, containing an amine of the formula I according to claim 1, which is active against harmful substances and in which R and $R^1$ are identical in each case and are a straight-chain or branched alkyl radical having a total of 1 to 14 C atoms or a cycloalkyl radical which has a total of 3 to 11 C atoms and can be substituted by alkyl, in a concentration of 0.01 to 30 and preferably 0.1 to 10 per cent by weight, based on the total antifouling paint.

10. A composition for the control of micro-organisms according to claim 4 containing a diamine of the formula I, in which R and $R^1$ are identical or different and are each a straight-chain or branched alkyl radical having a total of 1 to 12 C atoms or a cycloalkyl radical which has a total of 5 to 12 C atoms, of which not more than 5 to 8 are ring-forming C atoms, and can be substituted by alkyl, in a concentration of 0.1 to 10 and preferably 0.5 to 5 per cent by weight, based on the total composition.

**Revendications**

1. Procédé pour combattre les organismes nuisibles dans l'eau et sur des matières contenant de l'eau ou pratiquement anhydres, par incorporation d'amines primaires aliphatiques, en tant que matières actives, dans l'eau ou dans la matière à protéger, ou par application des amines primaires aliphatiques à la surface de la matière à protéger, procédé caractérisé en ce qu'on utilise, comme matière active, une amine répondant à la formule I

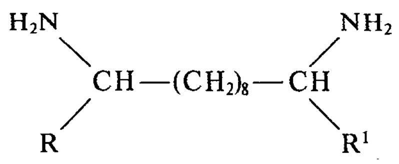

(I)

dans laquelle R et $R^1$ représentent chacun, indépendamment l'un de l'autre, un radical alkyle linéaire ou ramifié qui contient au total de 1 à 14 atomes de carbone, ou un radical cycloalkyle qui porte éventuellement un radical alkyle et qui contient en tout de 3 à 12 atomes de carbone.

2. Procédé (A) selon la revendication 1, caractérisé en ce qu'on combat des organismes nuisibles dans l'eau ou dans des solutions ou dispersions aqueuses au moyen d'une amine de formule I dans laquelle R et $R^1$ ont la même signification et représentent chacun un radical alkyle linéaire ou ramifié qui contient en tout de 1 à 14 atomes de carbone, ou un radical cycloalkyle, éventuellement alkylé, qui contient en tout de 3 à 11 atomes de carbone.

3. Procédé selon la revendication 2, caractérisé en ce qu'on utilise une amine de formule I dans laquelle R représente un radical alkyle linéaire contenant de 6 à 8 atome de carbone.

4. Procédé (B) selon la revendication 1, caractérisé en ce qu'on utilise les amines de formule I pour combattre des micro-organismes, de préférence pour protéger des matières naturelles ou artificielles, plus particulièrement des matières techniques, contre l'attaque par des micro-organismes, les symboles R et $R^1$ présents dans la formule I représentant chacun un radical alkyle linéaire ou ramifié contenant au total de 1 à 12 atomes de carbone, ou un radical cycloalkyle, éventuellement alkylé, contenant au total de 5 à 12 atomes de carbone dont au plus 5 à 8 font partie du cycle.

5. Procédé selon la revendication 4, caractérisé en ce qu'on utilise des amines de formule I dans lesquelles R et $R^1$ ont la même signification.

6. Procédé selon la revendication 5, caractérisé en ce qu'on utilise une amine de formule I dans laquelle R représente un radical alkyle, linéaire ou ramifié, qui contient au total de 4 à 8 atomes de carbone, ou un radical cyclo-alkyle dont le noyau contient de 5 à 8 atomes de carbone.

7. Produits pour combattre des organismes nuisibles dans l'eau ou dans des solutions ou dispersions aqueuses, selon la revendication 2, produits qui contiennent comme matière active une amine de formule I dans laquelle R et $R^1$ ont la même signification et représentent chacun un radical alkyle, linéaire ou ramifié, contenant au total de 1 à 14 atomes de carbone ou un radical cyclo-alkyle, éventuellement alkylé, qui contient au total de 3 à 11 atomes de carbone, la concentration en l'amine de formule I étant comprise entre 0,1 et 10% en poids, de préférence entre 0,5 et 5% en poids, par rapport à l'ensemble du produit.

8. Objets et revêtements en matière plastique devant agir contre des organismes nuisibles selon la revendication 1, plus particulièrement tubes, plaques, feuilles, vannes et robinets (ou clefs de robinets et garnitures correspondantes), récipients et cuvettes, caractérisés en ce qu'ils contiennent une amine de formule I dans laquelle R et $R^1$ sont identiques l'un à l'autre et représentent chacun un radical alkyle, linéaire ou ramifié, contenant au total de 1 à 14 atomes de carbone, ou un radical cyclo-alkyle, éventuellement alkylé, contenant au total de 3 à 11 atomes de carbone, en une concentration de 0,01 à 10% en poids, de préférence de 0,1 à 5% en poids, par rapport à l'ensemble de l'objet en matière plastique, amine qui est mélangée avec la matière constituant ledit objet ou revêtement.

9. Peintures anti-salissures pour revêtements devant être immergés dans l'eau, peintures qui contiennent une amine de formule I efficace contre les organismes nuisibles, amine dans laquelle R et $R^1$ sont identiques l'un à l'autre et représentent chacun un radical alkyle, linéaire ou ramifié, contenant au total de 1 à 14 atomes de carbone, ou un radical cyclo-alkyle, éventuellement alkylé, contenant au total de 3 à 11 atomes de carbone, en une concentration de 0,01 à 30% en poids, de préférence de 0,1 à 10% en poids, par rapport à l'ensemble de la peinture anti-salissure.

10. Produits pour combattre des micro-organismes selon la revendication 4, qui contiennent une diamine de formule I dans laquelle R et $R^1$ sont identiques ou différents et représentent chacun un radical alkyle, linéaire ou ramifié, contenant au total de 1 à 12 atomes de carbone, ou un radical cycloalkyle, éventuellement alkylé, contenant au total de 5 à 12 atomes de carbone dont au plus 5 à 8 font partie du cycle, en une concentration de 0,1 à 10% en poids, de préférence de 0,5 à 5% en poids, par rapport à l'ensemble du produit.